# EUROPÄISCHE PATENTANMELDUNG

(11) **EP 0 808 772 A1**
(43) Veröffentlichungstag der Anmeldung: **26.11.1997**
(21) Anmeldenummer: 97106512.3
(22) Anmeldetag: 19.04.1997
(51) Int. Cl.: B65B 51/30, B65B 9/12

(54) **Verfahren und Vorrichtung zum Heisssiegeln von Folien-Schläuchen**

(30) Priorität: 22.05.1996 DE 19620560
(71) Anmelder: Natec Reich, Summer GmbH & Co. KG, 88178 Heimenkirch (DE)
(72) Erfinder: Baur, Willi, 88167 Gestratz (DE); Steinbauer, Timo, 88161 Lindenberg (DE)
(74) Vertreter: Riebling, Peter, Dr.-Ing.

(57) **Zusammenfassung**

Die Erfindung betrifft ein Verfahren und eine Vorrichtung zum Heißsiegeln von Folienschläuchen, beispielsweise von mit einer Käsemasse gefüllten Folienschläuchen, wobei der produktgefüllte Folienschlauch (2) zunächst in einer Vordrängstation (1) mechanisch vorverdrängt und anschließend in mindestens einer nachgeschalteten,mit konstant oder intermittierend oder alternierend angetriebenen und sich paarweise synchron mit alternierender Geschwindigkeit drehenden, mit Siegelbacken (11,11',12,12') versehenen Siegelwalzen (7,8) ausgebildeten Siegelstation thermisch gesiegelt wird.
Der Vorteil dieses erfindungsgemäßen Verfahrens und der nach diesem Verfahren arbeitenden Vorrichtung zum Heißsiegeln von mit einem pastösen oder flüssigen Produkt gefüllten Schlauchfolien liegt insbesondere in einer, zu den bekannten Heißsiegel-Verfahren/-Vorrichtungen wesentlich höheren Transport- und Siegelleistung bei einwandfreier Siegelnaht-Qualität.

## Beschreibung

Gegenstand der vorliegenden Erfindung ist ein Verfahren und eine Vorrichtung zum Heißsiegeln von Folienschläuchen nach dem Oberbegriff des Anspruchs 1.

Derartige Heißsiegelstationen werden verwendet, um einen mit einem Produkt gefüllten Folienschlauch abschnittsweise zu siegeln. Beispielsweise ist es bekannt, einen mit einer Käsemasse gefüllten Folienschlauch zu befüllen und zunächst einer Vorverdrängstation zuzuführen, wo der mit der Käsemasse befüllte Folienschlauch zwischen die Verdrängstege der Vorverdrängstation eingepreßt wird, wodurch die Käsemasse aus den abschnittsweise gebildeten Verdrängbereichen im Folienschlauch heraus in andere Bereiche verdrängt wird. Danach wird der vorverdrängte Folienschlauch einer oder mehrerer hintereinander angeordneten Heißsiegelstationen zugeführt. Bei den Heißsiegelstationen ist es bekannt, jede Siegelstation als Walzenanordnung auszubilden, wobei auf einer Walze am Umfang gleichmäßig verteilt mehrere Siegelbacken angeordnet sind. Diese paarweise angeordneten Siegelwalzen laufen gegenläufig und bilden mit den einander zugewandten Siegelbacken einen Siegelspalt, durch welchen der Folienschlauch hindurchläuft. Die Transportgeschwindigkeit des Folienschlauches ist nun so gewählt, daß ein schmaler, vom Produkt verdrängter Bereich des Folienschlauches genau dann passend zwischen die einander zugewandten Siegelbacken läuft, wenn die Siegelbacken auf dem Material des Folienschlauches aufsitzen. Es kommt dann zu einer Siegelung in diesem verdrängten Bereich des Folienschlauches. Auf diese Weise werden abschnittsweise hintereinanderliegende und über die Siegelnähte zusammenhängende Abteilungen im Folienschlauch gebildet, die nachfolgend abgeschnitten werden, so daß einzelne befüllte Schlauchpackungen gebildet werden.

Bisher war die Siegelleistung einer derartigen Siegelstation ausreichend, wenn man eine Transportleistung von 600 Schlauchpackungen pro Minute voraussetzte. Es konnte dann eine konstante Siegelgeschwindigkeit (Umdrehungsgeschwindigkeit) der einzelnen Siegelwalzen beibehalten werden, d.h. die Transportgeschwindigkeit der Schlauchpackung war genau mit der Umdrehungsgeschwindigkeit jeder Siegelwalze synchronisiert, so daß eine gewisse Verweilzeit der Siegelbacken auf der Schlauchpackung von z.B. 10 Millisekunden gewährleistet war.

Mit der bekannten Anordnung war es jedoch nicht möglich, eine ausreichend dichte und feste Siegelnaht bei höheren Transportgeschwindigkeiten zu erreichen.

Der Erfindung liegt deshalb die Aufgabe zugrunde, ein Verfahren und eine nach dem Verfahren arbeitende Vorrichtung zu auszugestalten, daß eine wesentlich höhere Transport- und Siegelleistung erreicht werden kann.

Zur Lösung der gestellten Aufgabe ist die Erfindung durch das Verfahren nach dem Gegenstand des Anspruchs 1 gekennzeichnet.

Die vorrichtungsgemäßen Merkmale der Erfindung ergeben sich aus dem selbständigen Anspruch 7.

Wesentliches Merkmal der Erfindung ist, daß nun bei einer gleichbleibenden Transportvorschubgeschwindigkeit ein alternierender Antrieb für die Siegelwalzen vorgeschlagen wird. Dies bedeutet, daß - solange nicht gesiegelt wird - die Siegelwalzen sich mit einer relativ hohen Umdrehungsgeschwindigkeit drehen, die größer ist als eine - normale - synchrone Geschwindigkeit, die dem Vorschub des Folienschlauches angepaßt wäre.

Kurz vor dem Aufsetzen der jeweiligen Siegelbacke auf den zu siegelnden Bereich des Folienschlauches wird erfindungsgemäß die Umdrehungsgeschwindigkeit der Siegelwalze herabgesetzt, so daß die jeweilige Siegelbacke verzögert auf dem Siegelbereich des Folienschlauches aufsetzt und eine geforderte Verweilzeit von z.B. 10 Millisekunden einhält.

Nach dem Abheben der Siegelbacke von der fertig gesiegelten Naht auf dem Folienschlauch wird die Siegelwalze wieder in ihre Umdrehungsgeschwindigkeit beschleunigt, bis daß die nächste Siegelbacke dieser Siegelwalze wiederum in die Nähe der zu versiegelnden Naht kommt und kurz vor dem Aufsetzen auf die Siegelnaht des Folienschlauches ist. Dann wird wiederum die Umdrehungsgeschwindigkeit der Siegelwalze herabgesetzt.

Es wird also ein intermittierender oder alternierender Drehantrieb für die jeweiligen Siegelwalzenpaare vorgeschlagen, die im übrigen paarweise genau synchron angetrieben werden, jedoch mit alternierender Geschwindigkeit.

Wenn man z.B. am Umfang verteilt auf einer Siegelwalze vier Siegelbacken anordnet, dann kommt es bei einer vollständigen Umdrehung von 360° einer Siegelwalze vier mal zu einer Verzögerung bei der Umdrehung, nämlich genau dann, wenn die Siegelbacke kurz vor dem Aufsetzen auf den Folienschlauch ist, wobei die herabgesetzte Umdrehungsgeschwindigkeit solange beibehalten wird, bis diese Siegelbacke wieder von dem Folienschlauch abhebt.

Verwendet man z.B. drei oder fünf Siegelbacken, die gleichmäßig verteilt am Umfang der Siegelwalze angeordnet sind, kommt es auf den Drehwinkel von 360° der Siegelwalze zu einer Verzögerung der Umdrehungsgeschwindigkeit im Winkelgrad von 120° (bei drei Siegelbacken) oder im Winkelgrad von 72° sofern fünf Siegelbacken am Umfang der Siegelwalze angeordnet sind.

Hieraus ergibt sich, daß die Erfindung eine beliebige Anzahl von Siegelbacken an einer Siegelwalzenanordnung vorsieht.

Ebenso ist die Erfindung nicht darauf beschränkt, diese Siegelbacken auf dem Umfang von Siegelwalzen anzuordnen. Nach einer Weiterbildung der vorliegenden Erfindung ist es vorgesehen, daß statt der Siegelwalzen längliche Siegeltransportbänder verwendet werden, wobei auf dem Transportband (welches als endloses Band jeweils ausgebildet ist) eine Vielzahl derartiger Siegelbacken angeordnet sind.

Die Erfindung ist also nicht auf die Anordnung zylindrischer Siegelwalzen beschränkt, sondern sie ist auch für Siegelbänder geeignet, auf deren Oberfläche eine Vielzahl von Siegelbacken angeordnet sind.

Bei allen Ausführungsformen ist wichtig, daß die Siegelanordnungen stets paarweise vorgesehen sind und daß durch den Siegelspalt voneinander paarweise gegenüberliegenden Siegelbacken der mit dem Produkt gefüllte Folienschlauch hindurchgeführt wird.

Bei dementsprechend dünnem Material eines Folienschlauches kann es sogar vorgesehen sein, statt eines Siegelwalzenpaares oder eines Siegelbandpaares nur eine einzige Siegelwalze oder ein einziges Siegelband vorzusehen, wobei als Gegenfläche eine feststehende - gegebenenfalls beheizte - Fläche verwendet wird, gegen welche die jeweilige Siegelbacke den Folienschlauch verdrängt und dort siegelt.

Anstatt dieser feststehenden Gegenfläche, gegen welche die Siegelbacke siegelt, kann diese Gegenfläche auch bewegt ausgebildet sein, d.h. in Form eines Bandes oder dergleichen, um eine Gegenfläche für die sich drehende Siegelbacke zu bewerkstelligen.

Kern der vorliegenden Erfindung ist jedenfalls bei allen Ausführungsformen, daß im Zeitpunkt der Siegelung (oder jedenfalls kurz davor, während der Siegelung selbst und kurz danach) die Umdrehungsgeschwindigkeit der auf dem Folienschlauch aufsetzenden Siegelbacke im Vergleich zu der Vorschubgeschwindigkeit des Folienschlauches herabgesetzt wird, so daß der Folienschlauch kurzzeitig während der Siegelung durch die Siegelbacken abgebremst wird. Es kommt hier zwar kurzzeitig innerhalb von Millisekunden zu einem Aufstauen des Folienschlauches vor den sich schließenden Siegelbacken, was aber selbst für den Folienschlauch nicht schädlich ist, weil dieses kurzzeitige Aufstauen nach dem Abheben der Siegelbacken von dem Folienschlauch (nach erfolgter Siegelung) wieder aufgehoben wird. Bei dem vorstehend beschriebenen Ausführungsbeispiel wird also vorausgesetzt, daß der Folienschlauch mit konstanter Vorschubgeschwindigkeit durch die Siegelbacken hindurchbewegt wird und daß die Siegelbacken zum Zeitpunkt der Siegelung kurzzeitig verzögert auf dem Folienschlauch aufsetzen, um so eine genügende Zeit für die Anbringung der Siegelnaht zu bekommen.

In einer anderen Ausgestaltung der vorliegenden Erfindung ist es hingegen vorgesehen, daß die Siegelbacken mit einer konstanten Drehgeschwindigkeit drehen und ein intermittierender Antrieb für die Siegelbacken entfällt und daß stattdessen der intermittierende Antrieb dem Vorschubantrieb des Folienschlauches zugeordnet wird.

Bei dieser Ausführungsform wird also der intermittierende Vorschubantrieb dem Folienschlauch zugeordnet, während die Siegelbacken selbst gleichmäßig und synchron zueinander angetrieben werden. Bei dieser Ausführungsform laufen die Siegelwalzen mit einer relativ langsamen Umdrehungsgeschwindigkeit, wie sie - bei zugeordneter langsamer Vorschubgeschwindigkeit des Folienschlauches - benötigt wird, um eine ausreichende Siegelzeit zu gewährleisten. Vor und nach dem Siegeln mit dieser langsamen Umdrehungsgeschwindigkeit der Siegelwalzen wird dann der Folienschlauch ruckartig beschleunigt und wird also ruckartig zwischen den Siegelvorgängen so stark beschleunigt, daß damit eine wesentlich größere Transportgeschwindigkeit für den Folienschlauch erreichbar ist.

Es handelt sich also bei den beiden beschriebenen Ausführungsformen um kinematisch austauschbare Ausführungsbeispiele, wobei beim ersten Ausführungsbeispiel der intermittierende Antrieb den Siegelwalzen zugeordnet ist und der Folienschlauch mit einer relativ hohen Geschwindigkeit durch die Siegelwalzen hindurchtransportiert wird, während bei dem zweitgenannten Ausführungsbeispiel die Siegelwalzen eine relativ niedrige Geschwindigkeit aufweisen und der Folienschlauch mit hoher Geschwindigkeit an den Siegelwalzen vorbeitransportiert wird und nur während des Siegelvorganges dann stark abgebremst wird, um die geforderte Siegelzeit zu erreichen.

In einer dritten Ausführungsform ist die Kombination beider vorgenannten Ausführungsbeispiele vorgesehen, bei dem sowohl ein intermittierender Antrieb den Siegelwalzen zugeordnet ist, als auch ein intermittierender Antrieb dem Folienschlauch. Es gelten ansonsten die gleichen Erläuterungen wie vorstehend angegeben, d.h., es muß stets bei hoher Transportleistung dafür gesorgt werden, daß zum Zeitpunkt der Siegelung die Siegelbacken auf dem Folienschlauch eine genügende Verweilzeit haben, um eine ausreichende Qualität der Siegelnaht zu gewährleisten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert in Seitenansicht eine Verdräng- und Siegelstation;
- Figur 2:: schematisiert das Geschwindigkeitswegdiagramm einer Siegelwalze;
- Figur 3:: das Siegelwalzenpaar in der Drehstellung 0°;
- Figur 4:: das Siegelwalzenpaar in der Drehstellung 25°;
- Figur 5:: das Siegelwalzenpaar in der Drehstellung 45°;
- Figur 6:: das Siegelwalzenpaar in der Stellung 70°;
- Figur 7:: das Siegelwalzenpaar in der Stellung 90°;
- Figur 8:: das Siegelwalzenpaar in der Stellung 115°.

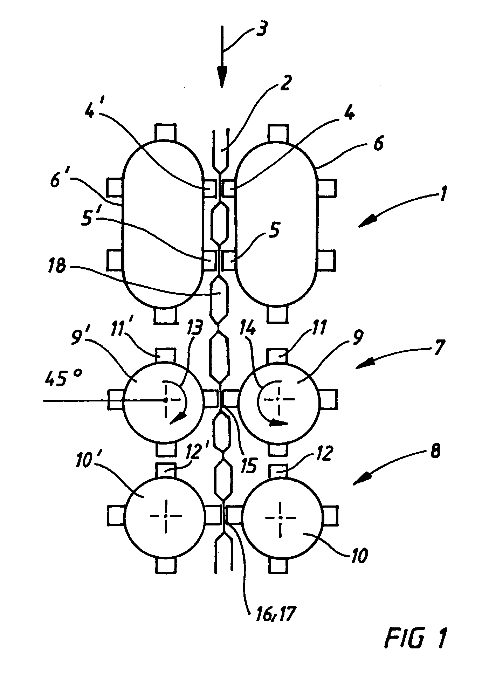

In Figur 1 wird in Pfeilrichtung 3 ein mit einem Produkt befüllter Folienschlauch 2 einer Vorverdrängstation 1 zugeführt. Diese besteht im wesentlichen aus zwei einander gegenüberliegenden Bändern 6,6', an denen jeweils Verdrängstege 4,4' bzw. 5,5' angeordnet sind. Zwischen dem Spalt der Verdrängstege 4,4' bzw. 5,5, wird der Folienschlauch 2 hindurchgeführt und in diesen Bereichen, wo sich die Verdrängstege 4,4' und 5,5' treffen, wird jeweils ein verdrängter Bereich im Folienschlauch 2 erzeugt. Aus diesem Bereich wird also die flüssige oder plastische Masse, mit der der Folienschlauch 2 befüllt ist, heraus in andere Bereiche verdrängt. Diese Masse fließt daher in die benachbarten Bereiche, die nachfolgend als Schlauchpackung 18 bezeichnet werden. Im Bereich dieser vorverdrängten Bereiche sollen durch eine nachgeschaltete Siegelwalzenstation die entsprechenden Siegelnähte angebracht werden. Im gezeigten Ausführungsbeispiel besteht die Siegelwalzenstation aus zwei Siegelwalzenanordnungen 7,8, von denen jede aus einer Siegelwalze 9,9' bzw. 10,10' besteht.

Nachdem die Siegelwalzenanordnungen 7,8 genau gleich ausgebildet sind und genau gleich arbeiten, genügt es, die Funktion der oberen Siegelwalzenanordnung 7 näher zu beschreiben.

Die beiden Siegelwalzen 9,9' bewegen sich in den Pfeilrichtungen 13,14 gegeneinander und bilden mit ihren einander zugewandten Siegelbacken 11,11' einen Siegelspalt, durch welchen der Folienschlauch 2 hindurchläuft. Die Transportgeschwindigkeit des Folienschlauches 2 in Pfeilrichtung 3 in Verbindung mit der Umdrehungsgeschwindigkeit der Siegelwalzen 9,9' in den Pfeilrichtungen 13,14 ist nun genau so gewählt, daß die Siegelwalzen 11,11' dann in gegenseitige enge Gegenüberstellung gelangen, wenn genau zu diesem Zeitpunkt ein vorverdrängter Bereich des Folienschlauches 2 zwischen diese Siegelwalzen 9,9' gelangt.

Es wird damit bei Position 15 und dementsprechend auch bei Position 16 jeweils eine Siegelnaht 17 an dem Folienschlauch 2 gesiegelt, so daß die dazwischen ausgebildeten Schlauchpackungen 18 abdichtend voneinander getrennt sind. Das Produkt ist also in jeweils einer Schlauchpackung 18 eingeschlossen.

Es wird noch hinzugefügt, daß die Siegelbacken der unteren Siegelwalzenanordnung 8 mit 12,12' bezeichnet sind.

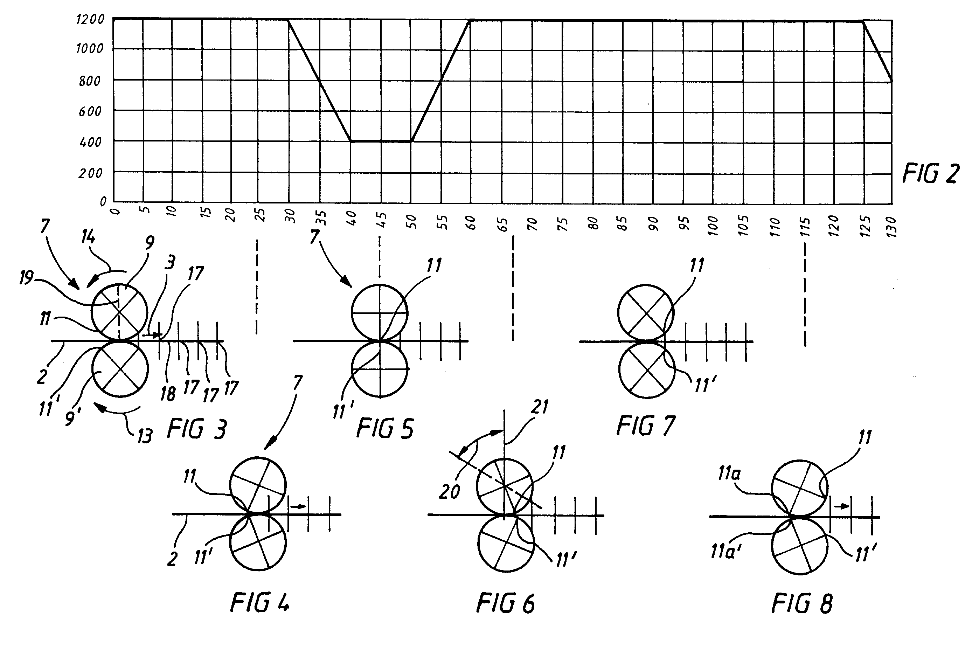

In Figur 2 ist in Verbindung mit den Figuren 3 - 8 ein Zeitablauf der Siegelwalzen 9,9' bezogen auf die Umdrehung der oberen Siegelwalze 9 dargestellt.

Man erkennt, daß zum Zeitpunkt 0 die Siegelbacken 11,11' kurz vor Erreichen des Siegelschlusses (engste Gegenüberstellung) sind und daß während dieser Zeit (kurz davor und kurz danach) eine Umdrehungsgeschwindigkeit der Siegelwalzen eingestellt ist, wie sie etwa eine Transportleistung von 1.200 Schlauchpackungen 18 pro Minute entspricht.

Diese Transportleistung wird nur als fiktive Zahl angegeben, sie kann auch wesentlich höher sein oder auch niedriger, je nach dem welches Material mit welchem Gewicht und welchen Eigenschaften gefahren wird.

Man erkennt im übrigen aus Figur 3, daß in dem Folienschlauch 2 am Auslauf der Siegelwalzen 9,9' bereits schon eine Reihe von Siegelnähten 17 angebracht wurden, die zwischen sich die Schlauchpackungen 18 definieren.

Sobald nun sich die Siegelwalzen 9,9' weiter in Pfeilrichtung 13,14 drehen (vergleiche Figur 4) kommt es zu einer Abbremsung der Umdrehungsgeschwindigkeit der beiden Siegelwalzen 9,9', so wie dies in Figur 4 dargestellt ist. Die Umdrehungsgeschwindigkeit wird stetig verringert, wie dies in Figur 5 dargestellt ist. Im Übergang zwischen der Figur 4, der Figur 5 und der Figur 6 wird die Siegelnaht 17 angebracht. Man erkennt aus dem Diagramm aus Figur 2, daß beim Übergang zwischen Figur 4 und Figur 5 die Umdrehungsgeschwindigkeit stetig herabgesetzt wurde und daß sie in Figur 5 am niedrigsten ist. Hier entspricht die Umdrehungsgeschwindigkeit der Siegelwalzen einer Transportleistung des Folienschlauches von nur noch etwa 400 Schlauchpackungen 18 pro Minute.

Nach Schluß der Siegelbacken 11,11' in Figur 5 wird dementsprechend die Umdrehungsgeschwindigkeit wieder stetig erhöht, wie dies in Figur 6 dargestellt ist. Der Umdrehungswinkel 20 wird hierbei stets gemessen als Winkelhalbierende zwischen zwei Siegelbacken (diese Winkelhalbierende ist in Figur 3 mit Bezugsgrade 19 bezeichnet) und der Vertikalen 21 (vergleiche Figur 6).

Die hohe Umdrehungsgeschwindigkeit wird ab Figur 6 entsprechend dem Diagramm in Figur 2 beigehalten, bis das in Figur 8 sich die nächsten Siegelbacken 11,11a auf ihre Schließstellung hinzubewegen, um eine neue Siegelnaht 17 anzubringen. In diesem Zeitpunkt wird gemäß Figur 2 bei der Umdrehung von 125° wiederum die Geschwindigkeit stetig verringert, so daß ein neuer Vorgang beginnt, so wie dies anhand der Figuren 4,5,6,7 erläutert wurde.

Es erfolgt also eine intermittierende Verringerung der Umdrehungsgeschwindigkeit der beiden einander gegenüberliegenden Siegelbacken 9,9'.

In gleicher Weise arbeitet im übrigen die untere Siegelwalzenanordnung 8 mit ihren Siegelbacken 12,12'.

Mit der beschriebenen Erfindung wird also der wesentliche Vorteil erreicht, daß bei wesentlich höheren Transportleistungen eine gute Qualität der Siegelnaht trotzdem erreicht wird.

### Zeichnungs-Legende

- 1: Vorverdrängstation
- 2: Folienschlauch
- 3: Pfeilrichtung
- 4: Verdrängsteg 4'
- 5: Verdrängsteg 5'
- 6: Band 6'
- 7: Siegelwalzenanordnung (obere)
- 8: 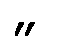 (untere)
- 9: Siegelwalze 9'
- 10: Siegelwalze 10'
- 11: Siegelbacke 11,11a,11a'
- 12: 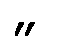 12'
- 13: Pfeilrichtung
- 14: 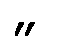
- 15: Position
- 16: Position
- 17: Siegelnaht
- 18: Schlauchpackung
- 19: Bezugsgerade 19'
- 20: Umdrehungswinkel
- 21: Vertikalen

## Patentansprüche

1. Verfahren zum Heißsiegeln von mit Füllprodukten gefüllten Folienschläuchen, wobei ein, beispielsweise mit einer Käsemasse gefüllter, Folienschlauch einen durch paarweise angeordnete Siegelwalzen gebildeten Siegelspalt durchläuft und der vom Füllprodukt verdrängte Bereich des Folienschlauches heiß gesiegelt wird und auf diese Weise abschnittsweise hintereinanderliegende und über die Siegelnähte zusammenhängende Abteilungen im Folienschlauch entstehen, die nachfolgend zu einzelnen befüllten Schlauchpackungen ausgebildet werden, **dadurch gekennzeichnet,** daß der mit dem Produkt gefüllte Folienschlauch (2) zunächst einer Vorverdrängstation (1) zugeführt wird, in der das in dem Folienschlauch (2) befindliche flüssige oder pastöse Produkt in Teilbereichen des Folienschlauches (2) mechanisch verdrängt wird und nachfolgend der derart vorverdrängte Folienschlauch (2) in mindestens einer nachgeschalteten, im wesentlichen aus zwei Siegelwalzenanordnungen (7, 8) mit Siegelwalzen (9, 9'; 10, 10') bestehenden, Siegelwalzenstation bei gleichbleibender Transportvorschubgeschwindigkeit und unter alternierendem Antrieb der Siegelwalzen (9, 9'; 10, 10') im jeweiligen Produkt-Verdrängungsbereich heiß gesiegelt wird.

2. Verfahren nach Anspruch 1, **dadurch gekennzeichnet,** daß das Füllprodukt des in einem Spalt zwischen Verdrängstegen (4, 4'; 5, 5') von zwei einandergegenüberliegenden Bändern (6; 6') der Vorverdrängstation (1) in Pfeilrichtung (3) geführten Folienschlauches (2) im Treffbereich der jeweiligen einander zugeordneten Verdrängstege (4, 4'; 5, 5') mechanisch verdrängt wird.

3. Verfahren nach Anspruch 1 oder 2, **dadurch gekennzeichnet,** daß in der, der Vorverdrängstation (1) nachgeschalteten, mindestens einen Siegelstation, der Folienschlauch (2) mit dem in Teilbereichen mechanisch verdrängten pastösen oder flüssigen Produkt, in jedem Schlauch-Verdrängungsbereich durch an den Siegelwalzen (9, 9'; 10, 10') angeordnete Siegelbacken (11, 11'; 12, 12') unter Wärmeeinwirkung jeweils mit einer Siegelnaht (17) versehen wird, so daß die dazwischen ausgebildeten, das Produkt vollständig einschließenden Schlauchpackungen (18) abdichtend voneinander getrennt sind.

4. Verfahren nach einem der Ansprüche 1 bis 3, **dadurch gekennzeichnet,** daß die dem Vorschub des Folienschlauches (2) angepaßte, hohe Umdrehungsgeschwindigkeit der sich gegenläufig in den Pfeilrichtungen (13, 14) bewegenden Siegelwalzen (9, 9'; 10, 10') kurz vor dem Aufsetzen der jeweiligen Siegelbacke (11, 11'; 12, 12') auf dem Folienschlauch (2) so verringert wird, daß eine ausreichende Verweilzeit der jeweiligen Siegelbacke (11, 11'; 12, 12') auf dem zu siegelnden Produkt-Verdrängungsbereich des Folienschlauches (2) gegeben ist und daß die Siegelwalzen (9, 9'; 10, 10') beim Abheben der jeweiligen Siegelbacke (11, 11'; 12, 12') von der auf dem Folienschlauch (2) angebrachten Siegelnaht (17) in die vormalige Umdrehungsgeschwindigkeit beschleunigt werden, so daß die jeweiligen, sich paarweise synchron mit alternierender Geschwindigkeit drehenden Siegelwalzenpaare (9, 9'; 10, 10') entweder intermittierend oder alternierend angetrieben sind.

5. Verfahren nach Anspruch 1, **dadurch gekennzeichnet,** daß die Siegelwalzen (9, 9'; 10, 10') mit den Siegelbacken (11, 11'; 12, 12') konstant angetrieben werden und der Vorschub des Folienschlauches (2) intermittierend erfolgt.

6. Verfahren nach Anspruch 1, **dadurch gekennzeichnet,** daß die Siegelwalzen (9, 9'; 10, 10') intermittierend angetrieben werden und der Vorschub des Folienschlauches (2) intermittierend vorgesehen ist.

7. Vorrichtung zur Durchführung des Verfahrens zum Heißsiegeln von Folienschläuchen, dadurch gekennzeichnet, daß diese aus der mit dem produktgefüllten Folienschlauch (2) in Pfeilrichtung (3) beschickten und diesen mechanisch bearbeitenden Vorverdrängstation (1) mit im wesentlichen zwei einander gegenüberliegenden Bändern (6; 6'), an denen jeweils einen Spalt zum Hindurchführen des Folienschlauches (2) bildende Verdrängstege (4,4'; 5,5') angeordnet sind und mindestens einer nachgeschalteten Siegelwalzenstation mit zwei Siegelwalzenanordnungen (7; 8) mit den Siegelwalzen (9, 9'; 10,10') besteht.

8. Vorrrichtung nach Anspruch 7, **dadurch gekennzeichnet,** daß die Umdrehungsgeschwindigkeit der sich in den Pfeilrichtungen (13; 14) gegeneinander bewegenden und mit ihren einander zugewandten Siegelbacken (11, 11'; 12, 12') einen Siegelspalt zum Hindurchlaufen des Folienschlauches (2) ausbildenden Siegelwalzen (9, 9'; 10, 10') der Transportgeschwindigkeit des Folienschlauches (2) in Pfeilrichtung (3) so angepaßt ist, daß sich beim Zeitpunkt der engsten Gegenüberstellung der Siegelbacken (11, 11'; 12, 12') der Produktverdrängungsbereich des Folienschlauches (2) zwischen diesen befindet.

9. Vorrichtung nach Anspruch 7, **dadurch gekennzeichnet,** daß die Siegelwalzen (9, 9'; 10, 10') der oberen und unteren Siegelwalzenanordnung (7; 8) der Siegelstation mit einer beliebigen Anzahl von Siegelbacken (11, 11'; 12, 12') ausgebildet oder statt der Siegelwalzen (9, 9'; 10, 10') längliche Siegeltransportbänder angeordnet sind, wobei auf dem jeweiligen endlos ausgebildeten Transportband eine Vielzahl von den Siegelbacken (11, 11'; 12, 12') vorhanden sind.

10. Vorrichtung nach Anspruch 7, **dadurch gekennzeichnet,** daß statt eines Siegelwalzenpaares (9, 9'; 10, 10') oder eines Siegelbandpaares nur eine einzige Siegelwalze oder nur ein einziges Siegelband mit einer zugeordneten und feststehend oder beweglich ausgebildeten sowie gegegebenenfalls beheizbaren Gegenfläche vorgesehen ist.

11. Vorrichtung nach Anspruch 7, **dadurch gekennzeichnet,** daß den Siegelbacken (11, 11'; 12, 12') ein konstanter Drehantrieb und dem Vorschubantrieb des Folienschlauches (2) ein intermittierender Antrieb zugeordnet ist.

12. Vorrichtung nach Anspruch 7, **dadurch gekennzeichnet,** daß sowohl den Siegelwalzen (9, 9'; 10, 10') als auch dem Vorschubantrieb des Folienschlauches (2) ein intermittierender Antrieb zugeordnet ist.
